# FASCICULE DE BREVET EUROPEEN

(11) **EP 0 418 154 B1**
(45) Date de publication et mention de la délivrance du brevet: **12.01.1994**
(21) Numéro de dépôt: 90402511.1
(22) Date de dépôt: 12.09.1990
(51) Int. Cl.: G01D 7/00

(54) **Procédé et système de contrôle à distance de l'assemblage d'un premier objet avec un deuxième objet**
Verfahren und System zur Fernsteuerung für den Zusammenbau eines ersten Objektes mit einem zweiten Objekt
Method and system for the assembly of a first object with a second object by remote control

(30) Priorité: 14.09.1989 FR 8912036
(43) Date de publication de la demande: 20.03.1991
(73) Titulaire: AEROSPATIALE Société Nationale Industrielle, 75781 Paris Cédex 16 (FR)
(72) Inventeur: Ferro, Daniel Vincent, F-31300 Toulouse (FR)
(74) Mandataire: Mongrédien, André

(56) Documents cités:
- CH-A- 626 993
- US-A- 3 910 533
- US-A- 4 851 905
- PROCEEDINGS TENCON'87, 1987 IEEE REGION 10 CONFERENCE, vol. 2 of 3, pages 555-559, IEEE, New York, US; J.-D. LEE et al.: "A new approach to 3-D robot location with single view"
- 1988 IEEE INTERNATIONAL CONFERENCE ON ROBOTICS AND AUTOMATION, Philadelphia, 24-29 avril 1988, vol. 1, pages 568-573, IEEE, New York, US; R.C. LUO et al.: "An adaptive robotic tracking system using optical flow"

## Description

La présente invention concerne un procédé et un système pour contrôler à distance l'assemblage d'un premier objet avec un deuxième objet.

Elle s'applique plus particulièrement au contrôle à distance de l'assemblage d'une pièce d'arrimage d'un véhicule spatial avec une pièce d'arrimage d'une station spatiale orbitale, cet assemblage étant effectué par commande du déplacement relatif du véhicule spatial vis-à-vis de la station, le pilote du véhicule n'ayant pas une vision directe de la pièce d'arrimage de ce véhicule et de la pièce d'arrimage de la station. Ce contrôle consiste à visualiser des paramètres essentiels des déplacements permettant l'assemblage, ainsi que des images fictives des pièces d'arrimage.

L'invention peut également s'appliquer à la robotique lorsqu'il s'agit d'assembler deux objets, l'un de ces objets étant porté par le bras mobile d'un robot. L'invention porte essentiellement sur la visualisation des paramètres essentiels permettant de contrôler à distance l'assemblage d'un premier objet avec un deuxième objet, cet assemblage étant effectué par commande d'un déplacement relatif de ce premier objet par rapport au deuxième objet, et par la visualisation d'images fictives correspondant respectivement aux parties de ces deux objets, qui doivent être assemblées.

On sait qu'il est très difficile, notamment dans le domaine de la robotique ou de l'astronautique, de contrôler à distance l'assemblage d'un premier objet avec un deuxième objet, par commande d'un déplacement relatif de ce premier objet par rapport au deuxième. Ce contrôle est très délicat lorsque la personne chargée d'effectuer ce contrôle doit agir sur les commandes nécessaires aux déplacements permettant cet assemblage et n'a pas une vision directe des parties respectives des deux objets qui sont à assembler.

Généralement, pour effectuer un tel contrôle, les procédés et systèmes existants utilisent une ou plusieurs caméras de télévision donnant des images directes des parties des deux objets à assembler. Toutefois, ces procédés et systèmes ne donnent aucune indication sur les paramètres essentiels des déplacements du premier objet vis-à-vis du second et ne permettent pas d' agir de façon efficace et précise sur les commandes de ces déplacements. C'est le cas par exemple du système décrit dans le document US-A-3 910 533.

L'invention a précisément pour but de remédier à ces inconvénients et notamment de fournir un procédé et de mettre en oeuvre un système permettant de contrôler à distance, de manière précise et efficace, l'assemblage d'un premier objet avec un deuxième objet, cet assemblage étant effectué par commande d'un déplacement relatif de ce premier objet par rapport au deuxième objet, sans que la personne chargée de l'assemblage ait une vision directe de ces deux objets ou une image réelle de ceux-ci.

Ces buts sont atteints notamment grâce à la visualisation des principaux paramètres concernant le déplacement relatif du premier objet vis-à-vis du second, ainsi que la visualisation d'images fictives des parties respectives des deux objets à assembler dans un plan d'un repère de référence lié au premier objet.

L'invention concerne tout d'abord un procédé pour contrôler à distance l'assemblage d'un premier objet avec un deuxième objet, cet assemblage étant effectué par commande d'un déplacement relatif du premier objet par rapport au deuxième objet, ce déplacement étant un mouvement de rapprochement par translation du premier objet en direction due deuxième objet, et/ou un mouvement de translation latérale du premier objet par rapport au deuxième objet, et/ou un mouvement de rotation du premier objet par rapport au deuxième objet, ces objets ayant respectivement une première et une deuxième parties d'assemblage, le procédé étant caractérisé en ce qu'il consiste :
- à définir un premier et un deuxième repères de référence liés respectivement aux premier et deuxième objets, chaque repère étant défini par une origine et trois axes orthogonaux,
- à déterminer dans le premier repère de référence, au cours dudit déplacement relatif, des valeurs instantanées d'écarts (X, Y, Z) entre l'origine (0₂) du deuxième repère de référence et l'origine (0₁) du premier repère de référence, et des valeurs instantanées d'angles de Cardan, dits de roulis, de tangage et de lacet, des axes du deuxième repère par rapport aux axes respectivement correspondants du premier repère,
- à traiter lesdites valeurs instantanées pour visualiser, sur un support de visualisation lié au premier objet, les valeurs instantanées des écarts et des angles de Cardan, et au moins un premier polygone fixe sur ce support, représentant un contour fictif de ladite première partie d'assemblage, un deuxième polygone, mobile sur ce support, représentant un contour fictif de ladite deuxième partie d'assemblage, ces deux polygones étant de même forme et de dimension semblable et le deuxième polygone ayant une position et une orientation instantanées dépendant des valeurs instantanées correspondantes des angles de Cardan du deuxième objet par rapport au premier objet, et un troisième polygone intérieur et homothétique au deuxième polygone, de même orientation que ce deuxième polygone, ce troisième polygone étant mobile à l'intérieur du deuxième polygone et occupant une position dépendant des écarts latéraux du deuxième objet par rapport au premier objet,
- à partir de cette visualisation, à agir sur la commande dudit déplacement relatif pour faire coïncider les premier et deuxième polygones et pour centrer le troisième polygone dans le deuxième polygone, jusqu'à une valeur nulle de ladite distance.

Selon une autre caractéristique du procédé, celui-ci consiste en outre, par traitement des valeurs instantanées des angles (ψ,ϑ,φ) de Cardan, à visualiser sur ledit support de visualisation des valeurs instantanées (ψ′,ϑ',φ') de vitesses de variation des angles de Cardan au cours du déplacement.

Selon une autre caractéristique, le procédé consiste en outre, par traitement des valeurs instantanées des écarts, à visualiser sur ledit support de visualisation des valeurs instantanées de vitesses (X') de rapprochement dudit premier objet avec ledit deuxième objet.

Selon une autre caractéristique, le procédé consiste aussi à visualiser respectivement par des curseurs mobiles dans des échelles fixes, les évolutions des valeurs instantanées des écarts transversaux et, par des signes distinctifs, des prédictions d'évolution de ces écarts dans un sens déterminé.

Selon une autre caractéristique, le procédé consiste à visualiser respectivement les valeurs de vitesses de variation des angles de Cardan dans des curseurs mobiles vis-à-vis d'échelles fixes.

Selon une autre caractéristique, le procédé consiste à visualiser les valeurs instantanées de vitesses de rapprochement dans un curseur fixe vis-à-vis d'une échelle de valeurs défilantes et à visualiser la prédiction de la croissance ou à la décroissance de ces vitesses, par un signe distinctif fixe.

L'invention a aussi pour objet un système de contrôle à distance de l'assemblage d'un premier objet avec un deuxième objet, cet assemblage étant effectué par commande d'un déplacement relatif du premier objet par rapport au deuxième objet, ce déplacement étant un mouvement de rapprochement du premier objet en direction du deuxième objet, et/ou un mouvement de translation latérale du premier objet par rapport au deuxième objet, et/ou un mouvement de rotation du premier objet par rapport au deuxième objet, ces objets présentant respectivement une première et une deuxième parties d'assemblage, caractérisé en ce que le système comporte :
- des moyens de repérage pour fournir dans un premier repère de référence lié au premier objet, au cours du déplacement, des signaux représentatifs de valeurs instantanées d'écarts entre l'origine du premier repère de référence lié au premier objet et l'origine d'un deuxième repère de référence lié au deuxième objet, et des valeurs instantanées d'angles de Cardan, dits de roulis, de tangage et de lacet, respectivement entre des axes du deuxième repère et des axes correspondants du premier repère, chaque repère étant défini par une origine et trois axes orthogonaux, les signaux représentatifs des valeurs instantanées étant fournis sur des sorties des moyens de repérage,
- un calculateur relié à une mémoire et aux sorties des moyens de repérage, pour traiter les signaux représentatifs des valeurs instantanées pour obtenir ces valeurs instantanées et pour permettre ledit contrôle du mouvement du premier objet par rapport au deuxième objet,
- des moyens de visualisation reliés à des sorties de commande du calculateur pour visualiser sur un support de visualisation, au cours du déplacement, au moins des valeurs instantanées des écarts et des angles de Cardan, des valeurs instantanées de variations de vitesses des angles de Cardan, des valeurs instantanées de vitesses de rapprochement, et pour visualiser au moins un polygone fixe sur le support, représentant un contour fictif de ladite première partie d'assemblage, un deuxième polygone, mobile sur ce support, représentant un contour fictif de ladite deuxième partie d'assemblage, ces deux polygones étant de même forme et de même dimension et le deuxième polygone ayant une position et une orientation instantanées dépendant des valeurs instantanées correspondantes des angles de Cardan du deuxième objet par rapport au premier objet, et un troisième polygone, intérieur et homothétique au deuxième polygone, de même orientation que ce deuxième polygone, ce troisième polygone étant mobile à l'intérieur du deuxième polygone et occupant une position dépendant des écarts latéraux du deuxième objet par rapport au premier objet, cette visualisation permettant de contrôler à distance le déplacement du premier objet par rapport au deuxième objet pour agir en conséquence sur la commande de déplacement du premier objet par rapport au deuxième objet.

Selon une autre caractéristique, les moyens de repérage comportent une cible caractéristique solidaire du deuxième objet, un moyen solidaire du premier objet, fournissant sur des sorties des signaux représentatifs de l'image de la cible, des écarts de distance et des angles de Cardan dans le premier repère de référence.

Selon une autre caractéristique, les moyens pour obtenir lesdits signaux représentatifs sont constitués par une caméra vidéo fournissant lesdits signaux sur des sorties.

Selon une autre caractéristique, les moyens de visualisation sont des moyens à écran, l'image de la cible étant superposée sur l'écran avec lesdits premier, deuxième et troisième polygones.

Selon une autre caractéristique, les moyens de visualisation à écran sont des moyens à commande d'affichage dans différentes couleurs.

Selon une autre caractéristique, le premier objet est solidaire du bras d'un robot, le système étant utilisé pour contrôler l'assemblage de la première partie du premier objet avec la deuxième partie du deuxième objet.

Selon une autre caractéristique, la première partie du premier objet est une pièce d'arrimage d'un véhicule spatial, la deuxième partie du deuxième objet étant une pièce d'arrimage d'une station spatiale orbitale, le système étant utilisé pour contrôler le rendez-vous spatial entre le véhicule et la station.

Les caractéristiques et avantages de l'invention ressortiront mieux de la description qui va suivre, donnée en référence aux dessins annexés dans lesquels :
- la figure 1 représente schématiquement deux objets à assembler par déplacement relatif de l'un d'eux vis-à-vis de l'autre, en contrôlant à distance cet assemblage, grâce au procédé et au système de l'invention,
- la figure 2 représente schématiquement deux repères permettant de mieux comprendre la définition des angles de Cardan,
- la figure 3 représente schématiquement un support de visualisation sur lequel apparaissent des informations et des figures, permettant selon l'invention de contrôler l'assemblage de deux objets,
- la figure 4 représente schématiquement le système de l'invention,
- la figure 5 représente schématiquement une cible composée de réflecteurs portée par l'un des objets et servant au contrôle de l'assemblage de deux objets, selon l'invention,
- la figure 6 permet de mieux comprendre le rôle de la cible de réflecteurs, dans l'invention.

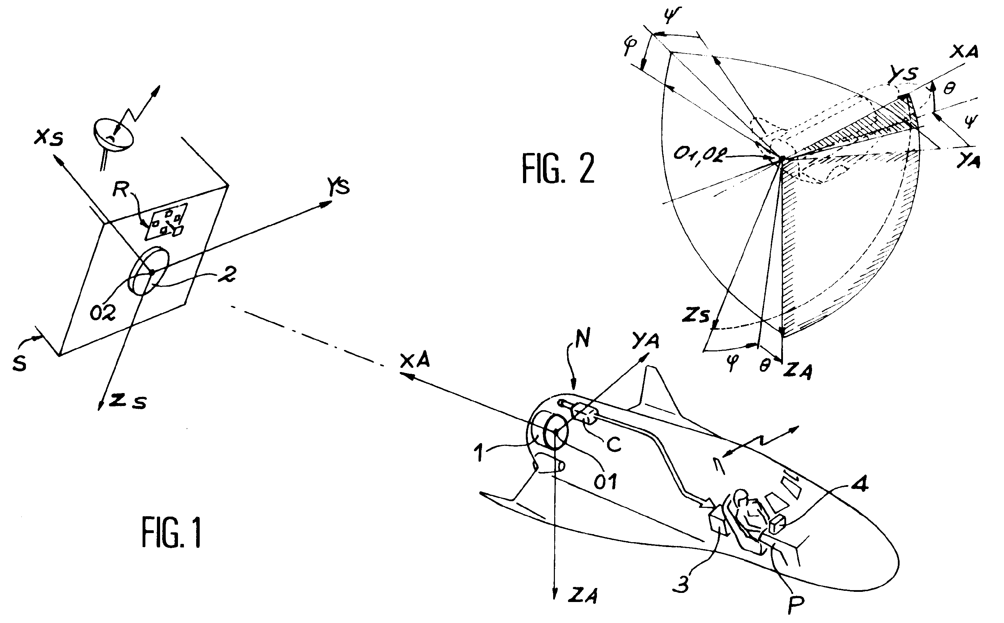

La figure 1 représente schématiquement deux objets N et S dont on veut contrôler l'assemblage, cet assemblage étant effectué par commande d'un déplacement relatif du premier objet N par rapport au deuxième objet S, en utilisant le procédé et le dispositif de contrôle de l'invention.

Dans l'application décrite, on suppose que le premier objet N est un véhicule spatial et que le deuxième objet S est une station orbitale. Dans d'autres applications, telles que la robotique par exemple, le premier objet pourrait être fixé à l'extrémité du bras d'un robot pour être assemblé avec un deuxième objet indépendant de ce bras.

La figure 1 permet de mieux comsprendre l'invention lorsque celle-ci est utilisée dans un rendez-vous orbital. Dans cette application le premier objet ou véhicule N comporte une première partie d'assemblage ou pièce d'arrimage 1, tandis que le deuxième objet comporte une deuxième partie d'assemblage ou pièce d'arrimage 2. Ce sont ces pièces 1 et 2 qui doivent être assemblées lors d'un rendez-vous.

La description du procédé et du système de l'invention, utilisés pour un rendez-vous orbital, reste valable pour l'assemblage de deux objets dont l'un d'eux est porté par le bras mobile d'un robot. Dans ce cas le contrôle effectué grâce à l'invention permet d'agir en conséquence sur la commande de déplacement du bras du robot.

Le déplacement relatif du premier objet N par rapport au deuxième objet S, qui permet l'assemblage de ces deux objets, est constitué de différents mouvements : l'un de ces mouvements est un mouvement de rapprochement par translation du premier objet ou véhicule N en direction du deuxième objet ou station S. Un autre mouvement peut être un mouvement de translation latérale du premier objet N par rapport au deuxième objet S. Enfin, un autre mouvement peut être un mouvement de rotation du premier objet N par rapport au deuxième objet S.

Le procédé de l'invention consiste tout d'abord à choisir un premier repère de référence lié au premier objet N. Ce repère est défini par une origine 0₁ et par trois axes orthogonaux X_{A}, Y_{A}, Z_{A}. Un deuxième repère de référence lié au deuxième objet S est également choisi : il est défini par une origine 0₂ et par trois axes orthogonaux X_{S}, Y_{S}, Z_{S}.

Dans l'application de l'invention à un rendez-vous orbital, on suppose que la position relative des deux objets est connue grâce à un système extérieur connu de calcul de position relative et dérivée. On suppose également que, lorsque le contrôle est mis en oeuvre, le premier objet ou véhicule spatial N est alors proche du deuxième objet ou station orbitale S (une centaine de mètres environ) et que le véhicule spatial N a effectué un retournement approprié permettant de présenter la première pièce d'assemblage ou d'arrimage 1 en regard de la face de la station S qui porte la deuxième pièce d'assemblage ou d'arrimage 2 (la pièce d'arrimage 1 est à l'arrière du véhicule 1 dans l'exemple représenté).

L'origine O₁ du premier repère de référence est supposée confondue avec le centre de gravité de la première pièce d'arrimage 1, tandis que l'origine 0₂ du deuxième repère est supposée confondue avec le centre de gravité de la deuxième pièce d'arrimage 2.

On a également représenté sur cette figure le poste de pilotage ou de commande qui comporte notamment des moyens de commande P permettant d'agir sur le déplacement relatif du premier objet N par rapport au deuxième objet S. Ces moyens de commande ne sont pas décrits ici en détail. Ce poste de pilotage comporte également des moyens de réception et de traitement, non représentés, permettant au pilote de connaître la position relative de son véhicule par rapport à la station.

Après avoir défini les repères décrits plus haut, le procédé consiste ensuite à déterminer, dans le premier repère de référence (O₁, X_{A}, Y_{A}, Z_{A}) au cours du déplacement relatif du premier objet N vers le deuxième objet S, des valeurs instantanées d'écarts entre l'origine O₂ du deuxième repère de référence (O₂, X_{S}, Y_{S}, Z_{S}) et l'origine O₁ du premier repère. Le procédé consiste aussi à déterminer des valeurs instantanées d'angles de Cardan, dits de roulis, de tangage et de lacet, des axes du premier repère (X_{A}, Y_{A}, Z_{A}) par rapport aux axes respectivement correspondants (X_{S}, Y_{S}, Z_{S}) du premier repère, les origines O₁ et O₂ des deux repères étant supposées confondues. Ces angles de Cardan ne seront pas définis ici en détail car ils sont bien connus dans l'état de la technique, notamment en aéronautique et en astronautique ; toutefois, la figure 2 en donne une représentation schématique.

L'angle de lacet ψ est l'angle de rotation autour de l'axe Z_{S} qui amène l'axe X_{S} du deuxième repère en coïncidence avec la projection de l'axe X_{A} du premier repère sur le plan X_{S}Y_{S}.

L'angle de tangage ϑ est l'angle de rotation autour de l'axe Y_{S} qui amène la projection de l'axe X_{A} du premier repère sur le plan X_{S}Y_{S} du deuxième repère, en coïncidence avec l'axe X_{A}.

L'angle de roulis φ est l'angle de rotation autour de l'axe X_{A} du premier repère qui amène la projection de l'axe Y_{A} du premier repère sur le plan X_{S}Y_{S} du deuxième repère, en coïncidence avec l'axe Y_{A}.

Ces différents angles sont déterminés, comme on le verra plus loin en détail, grâce à une caméra C qui est embarquée sur le premier objet N et qui est donc liée au premier repère ; cette caméra a son objectif pointé vers une cible de réflecteurs R qui est portée par le deuxième objet et qui est donc liée au deuxième repère. L'image obtenue grâce aux signaux vidéos fournis sur des sorties de la caméra est analysée et traitée par calculateur 3 qui détermine, grâce à un programme de traitement à la portée de l'homme de métier, les valeurs instantanées des angles de Cardan des axes du deuxième repère, par rapport aux axes respectivement correspondants du premier repère. Cet agencement permet également de déterminer les valeurs instantanées des écarts entre l'origine O₂ du deuxième repère et l'origine O₁ du premier repère. Ces écarts peuvent être soit des écarts latéraux du deuxième repère par rapport au premier, mesurés sur les axes X_{A}, Z_{A}, du premier repère, soit des écarts donnant le rapprochement du deuxième repère par rapport au premier, mesurés sur l'axe X_{A} du premier repère.

Le procédé de l'invention consiste alors à contrôler, notamment grâce à la connaissance des valeurs instantanées des écarts et des angles mentionnés plus haut, le positionnement des pièces à assembler pour agir en conséquence sur les commandes de déplacement du premier objet.

Ce contrôle consiste essentiellement à traiter les valeurs instantanées des écarts et des angles de Cardan, pour visualiser sur un support de visualisation de moyens de visualisation 4 (un écran d'un appareil de visualisation vidéo de préférence), lié au premier objet N, des paramètres et des figures géométriques permettant à la personne ou pilote contrôlant l'assemblage à distance, d'agir en conséquence sur les commandes de déplacement du premier objet N pour assurer un assemblage parfait.

Les figures géométriques qui sont visualisées sont obtenues à partir du traitement des valeurs instantanées des écarts et des angles de Cardan.

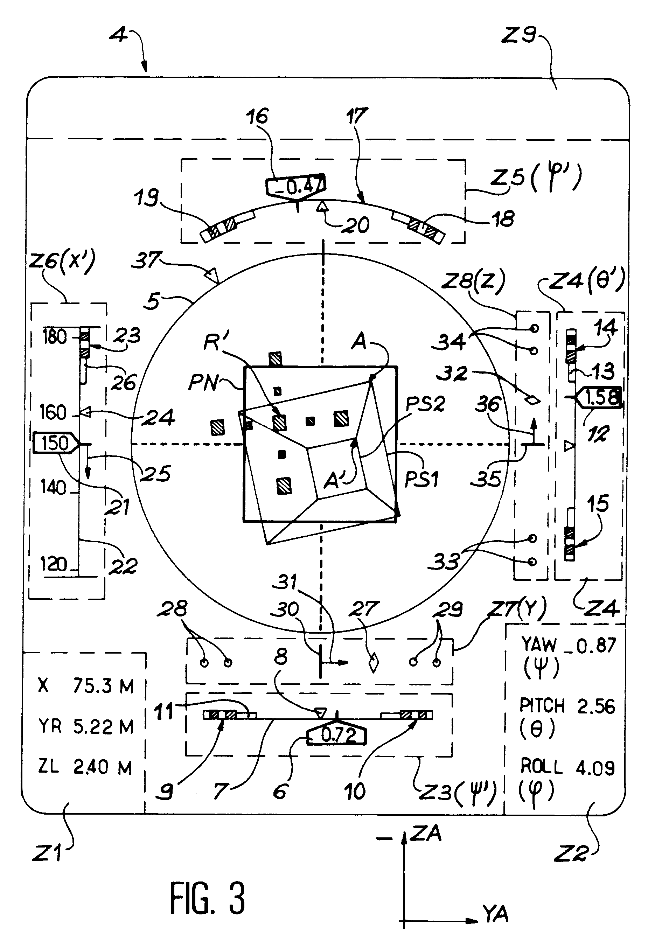

Ces figures géométriques sont représentées sur la figure 3. Cette figure représente aussi les informations essentielles de contrôle qui apparaissent sur le support de visualisation et qui seront décrites plus loin.

Les figures géométriques apparaissant sur le support de visualisation comportent un premier polygone PN fixe sur le support et représentant un contour fictif de la première partie d'assemblage ou d'arrimage 1 du premier objet. Ce polygone est de préférence un carré centré sur l'origine des axes Y_{A}, Z_{A}, du premier repère de référence. Ce repère est visualisé ici sous forme de traits interrompus ; on visualise également sur le support un cercle ou boule de repérage 5, centré sur l'origine des axes Y_{A}, Z_{A} du premier repère.

Les figures géométriques comportent aussi un deuxième polygone PS1, mobile sur le support de visualisation et représentant un contour fictif de la deuxième partie d'assemblage ou d'arrimage 2 du deuxième objet S. Ce deuxième polygone présente la même forme et la même dimension que le premier polygone (un carré de préférence), son orientation et sa position instantanées dépendent des valeurs instantanées des angles de Cardan ψ, ϑ, φ.

Les figures géométriques apparaissant sur le support de visualisation comportent aussi un troisième polygone PS2, intérieur et homothétique au deuxième polygone PS1, de même orientation que ce deuxième polygone. Ce troisième polygone (un carré de préférence) est mobile à l'intérieur du deuxième polygone et occupe dans celui-ci une position dépendant des écarts latéraux (mesurés sur les axes X_{A}, Z_{A} du premier repère) du deuxième objet S par rapport au premier objet N. Les traitements qui permettent la visualisation de ces trois polygones ne sont pas ici décrits en détail ; il est en effet à la portée de l'homme de métier de visualiser de tels polygones quand on a définit leurs dimensions respectives et que l'on connaît leurs positions et leurs orientations grâce à la connaissance préalable des valeurs instantanées des écarts et des angles de Cardan.

Le contrôle d'assemblage à partir de la visualisation de ces polygones permet d' agir sur commandes P de déplacement du premier objet N, de manière à obtenir sur le support de visualisation la superposition du deuxième polygone PS1 avec le premier polygone PN, et le centrage du polygone PS2 à l'intérieur du deuxième polygone PS1. En effet, lorsque cette superposition et ce centrage sont parfaitement obtenus, c'est que les axes X_{A} et X_{S} des premier et deuxième repères coïncident, et que les axes Y_{A}, Z_{A}, du premier repère et les axes Y_{S}, Z_{S}, du deuxième repère présentent respectivement la même orientation. Lorsque l'assemblage est réalisé, tous les axes du premier repère sont en coïncidence avec tous les axes respectivement correspondants du deuxième repère.

Dans l'exemple représenté sur la figure, les angles de Cardan ont des valeurs non nulles et les écarts latéraux sont importants. L'inclinaison du deuxième polygone vers la gauche par rapport au premier polygone indique un angle de roulis important. Le troisième polygone PS2 occupe à l'intérieur du deuxième polygone PS1 une position décalée vers le bas et vers la droite. Ce décalage indique notamment que le premier objet N est situé trop à droite et trop vers le bas par rapport à ce premier objet quand on regarde en direction de celui-ci.

Pour mieux visualiser la position du troisième polygone PS2 à l'intérieur du deuxième polygone PS1 et pour donner à l'ensemble de la figuration une image de perspective stylisée intuitivement interprétable, il est également possible de faire apparaître sur le support de visualisation des segments tels que AA', reliant chaque sommet tel que A du deuxième polygone PS2 avec le sommet correspondant A' du troisième polygone PS1. Lorsque ces polygones sont des carrés, tels que dans l'exemple représenté sur la figure, les quatre segments tels que AA' présentent des longueurs égales lorsque le carré PS2 est parfaitement centré dans le carré PS1.

Pour faciliter la distinction de ces différents polygones il est possible de commander les moyens de visualisation, de façon connue, de manière à obtenir un affichage de ces polygones dans des couleurs différents. C'est ainsi par exemple que le premier polygone PN (qui peut être qualifié de "maquette véhicule") peut être de couleur jaune, tandis que les deuxième et troisième polygones PS1, PS2 (qui peuvent être qualifiés de "maquette objet"), peuvent être de couleur bleue. L'obtention de ces couleurs est à la portée de l'homme de métier.

Les écarts latéraux mesurés selon les axes Y_{A}, Z_{A}, du premier repère, ainsi que la distance séparant l'origine des deux repères, mesurée selon l'axe X_{A}, peuvent être affichés par exemple dans une zone Z₁ du support de visualisation. Dans l'exemple choisi, la distance X mesurée selon l'axe X_{A} (indication X 75.3 M) est égale à 75,3 m tandis que les écarts latéraux Y, Z, mesurés respectivement selon les axes Y_{A}, Z_{A} (indications YR 5.22 M et ZL 2.40 M), sont égaux à 5,22 m et à 2,40 m. Pour l'écart latéral Y, la lettre R indique que le premier objet est situé à droite en regardant le deuxième objet. Si ce premier objet était situé à gauche, on utiliserait la lettre L par exemple. Pour l'écart latéral Z, la lettre L indique que le premier objet est situé vers le bas vis-à-vis du deuxième objet. La lettre H indiquerait par exemple que ce premier objet est situé en haut vis-à-vis du deuxième objet. Il est bien entendu possible de choisir des couleurs différentes pour la visualisation de ces paramètres. C'est ainsi par exemple que les lettres X, Y, Z et M peuvent être de couleur blanche sur un écran de visualisation de couleur sombre, tandis que les chiffres peuvent être de couleur verte, ainsi que les lettres R, L et H indiquant le positionnement vers la droite ou vers la gauche, ou vers le haut ou vers le bas, du premier objet vis-à-vis du deuxième objet.

Les valeurs des angles ψ de lacet, ϑ de tangage et φ de roulis sont respectivement visualisées, par exemple dans une zone Z₂ du support de visualisation, par les dénominations YAW, PITCH et ROLL accompagnées des valeurs respectives de ces angles. C'est ainsi que l'angle ψ de lacet (indication YAW -0.87) a une valeur négative de 0,87°, tandis que les angles de tangage et de roulis ont respectivement pour valeurs 2,56° et 4,09° (indications PITCH 2.56 et ROLL 4.09).

L'assemblage des deux objets est parfaitement réalisé lorsque le deuxième polygone PS1 est exactement superposé au premier polygone PN, que le troisième polygone PS2 est exactement centré dans le deuxième polygone PS1, que les valeurs des angles de lacet, de tangage, de roulis (YAW, PITCH, ROLL), et que les valeurs des écarts latéraux Y, Z et de l'éloignement X sont nulles. Le contrôle de l'assemblage des deux objets permet d'agir sur les commandes de mouvement relatif, de manière à rechercher constamment au cours du rapprochement des deux objets des valeurs nulles des angles de Cardan, des écarts latéraux, une superposition du premier et du deuxième polygone et un centrage aussi parfait que possible du troisième polygone dans le deuxième.

Comme précédemment, des couleurs différentes peuvent être choisies pour la visualisation des valeurs des angles de Cardan. C'est ainsi par exemple que les dénominations YAW, PITCH, ROLL, peuvent être visualisées en blanc sur un écran sombre et que les valeurs de ces angles peuvent être visualisées par des chiffres et des signes de couleur verte.

l'obtention de ces couleurs dans tout système de visualisation est à la portée de l'homme de métier.

Le procédé de l'invention consiste aussi, par traitement des valeurs instantanées des angles de Cardan, à visualiser sur le support des moyens de visualisation 4 des valeurs ψ', ϑ', φ', de vitesses instantanées de variation des angles de Cardan, au cours du déplacement du premier objet vers le deuxième objet. L'obtention des valeurs de vitesses instantanées de variation des angles de Cardan est à la portée des hommes de métier puisqu'elle est obtenue en dérivant les valeurs respectives de ces angles par rapport au temps. Ces valeurs de vitesses de variation des angles de Cardan sont visualisées dans des curseurs mobiles vis-à-vis d'échelles fixes.

C'est ainsi par exemple que la vitesse de variation ψ' de l'angle de lacet est visualisée dans une zone Z₃ du support de visualisation. La valeur de cette vitesse (indication 0.72) qui est égale à 0,72°/s dans l'exemple représenté est visualisée dans un curseur 6 mobile vis-à-vis d'une échelle fixe 7. Le point milieu de cette échelle est représenté par un triangle 8 situé dans le prolongement de l'axe Z_{A} du premier repère de référence. Cette échelle comporte des butées limites 9, 10, entre lesquelles doit se situer le curseur 6 quand les opérations d'assemblage se déroulent normalement. Comme dans le cas précédent, différentes couleurs d'affichage peuvent être choisies dans la zone Z₃. C'est ainsi par exemple que le curseur 6 est de couleur jaune, tandis que la valeur 0.72 de la vitesse de lacet est affichée en vert. Les butées limites présentent une alternance de zones blanches 9 et rouges 10 , ainsi qu'un prolongement 11 de couleur ambre. Le triangle 8 matérialisant le point milieu de l'échelle peut être de couleur blanche. La localisation du curseur 6 vers la droite du point milieu 8 de l'échelle indique par exemple une tendance à l'augmentation de la vitesse de lacet.

En utilisant les mêmes symboles et un code de couleurs semblables, les valeurs instantanées des vitesses de variation ϑ' de l'angle de tangage sont affichées dans une zone Z₄ du support de visualisation. Le curseur 12, dans lequel est visualisée la valeur instantanée de la vitesse de variation ϑ' de l'angle de tangage (indication 1.58), qui est égale à 1,58°/s dans l'exemple considéré, est mobile vis-à-vis d'une échelle fixe 13. Le point milieu de cette échelle est ici aussi matérialisé par un triangle 14 situé dans le prolongement de l'axe Y_{A} du premier repère de référence, entre des butées extrêmes 14, 15.

Enfin, les valeurs des vitesses de variation de l'angle de roulis φ′ sont affichées dans une zone Z₅ du support de visualisation. Les codes de couleurs choisis pour cette visualisation sont identiques à ceux qui sont choisis pour la visualisation des vitesses de variation ψ'et ϑ' des angles de lacet et de tangage dans les zones Z₃, Z₄, décrites précédemment. La valeur de la vitesse de variation φ' de l'angle de roulis (indication -0.47) qui est égale à -0,47°/s dans l'exemple considéré est visualisée dans un curseur 16 mobile vis-à-vis d'une échelle fixe 17, présentant des butées extrêmes 18, 19 et un point milieu repéré par un triangle 20 situé dans le prolongement de l'axe Z_{A} du premier repère de référence. La localisation vers la gauche du curseur 16 indique une tendance à la décroissance de la vitesse de variation de l'angle de roulis.

Selon l'invention, le procédé consiste aussi à visualiser, par traitement des valeurs instantanées des écarts, et notamment des valeurs des distances entre les origines des deux repères mesurées selon l'axe X_{A} du repère de référence, les valeurs instantanées de vitesse X' de rapprochement du premier objet et du deuxième objet. Cette visualisation est effectuée par exemple dans une zone Z₆ du support de visualisation. La valeur de chaque vitesse instantanée de rapprochement est visualisée dans un curseur 21 fixe (indication 150, c'est-à-dire 150 mm/s par exemple) vis-à-vis d'une échelle 22 de valeurs défilantes. Sur cette échelle est visualisée une butée limite 23, ainsi qu'un triangle 24 représentant par exemple un index indiquant une consigne de vitesse de rapprochement. Le procédé consiste à visualiser dans cette même zone Z₆ la prédiction à 10 secondes par exemple, de la vitesse de rapprochement ; cette tendance est indiquée par un réticule de dimension proportionnelle à d_{X'}/dₜ. Ce signe est ici une flèche 25 dirigée vers le haut ou vers le bas. Dans l'exemple représenté, la flèche 25 est dirigée vers le bas et indique ainsi une décroissance de la vitesse de rapprochement des deux objets par rapport à la vitesse de consigne.

Comme dans les cas précédents, des codes de couleurs peuvent être choisis pour visualiser les différents symboles ou chiffres. C'est ainsi par exemple que la butée 23 est constituée d'une alternance de zones blanches et rouges, précédées d'un indicateur 26 de couleur ambre. L'échelle 22 et les chiffres sont de couleur blanche, tandis que le curseur 21 est de couleur jaune ; la flèche 25 est de couleur verte et le triangle 24 est de couleur magenta.

Enfin, selon le procédé de l'invention, on visualise respectivement par des curseurs mobiles dans des échelles fixes, les évolutions des valeurs des écarts transversaux (Y, Z), mesurées respectivement selon les axes Y_{A} et Z_{A} du premier repère de référence ; on visualise aussi par des signes distinctifs, des prédictions de ces écarts à 10 secondes par exemple, dans un sens déterminé.

C'est ainsi par exemple que les évolutions des écarts Y, mesurés selon l'axe Y_{A} du premier repère de référence, sont visualisées dans une zone Z₇ par les déplacements du'un curseur 27, en forme de losange par exemple, se déplaçant vis-à-vis d'une échelle fixe délimitée par deux butées limites 28, 29 ; chacune de ces butées est représentée par deux cercles. Le point milieu de cette échelle est représenté par un segment 30 situé dans le prolongement de l'axe Z_{A} du premier repère de référence. Un signe distinctif, tel que la flèche 31 par exemple, représente la prédiction à 10 secondes de l'évolution de l'écart transversal Y dans un sens déterminé. Dans l'exemple représenté, la tendance de l'évolution de cet écart transversal est vers la droite.

Comme pour la visualisation des paramètres précédents, des codes de couleurs peuvent être choisis. C'est ainsi par exemple que les butées limites 28, 29, peuvent être de couleur blanche, le segment 30 de couleur jaune, la flèche 31 de couleur verte et le losange 27 de couleur magenta.

De la même manière, l'écart transversal Z mesuré selon l'axe Z_{A} du premier repère de référence, ainsi que la tendance de cet écart à évoluer dans un sens déterminé, sont visualisés dans une zone Z₈ de l'écran de visualisation en adoptant un code de couleur semblable à celui qui a été choisi dans la zone Z₇. Dans cet exemple, le losange 32 est situé au-dessus du segment 35 matérialisant le point milieu de l'échelle, et la flèche 36 d'indication de tendance de l'écart est dirigée vers le haut. Ceci signifie que les écarts mesurés selon l'axe Z_{A} du repère de référence sont négatifs et que leur tendance est à une évolution vers le haut.

Le cercle ou boule 5 peut être par exemple de couleur blanche, tandis que les traits interrompus qui matérialisent les axes Y_{A}, Z_{A}, du premier repère de référence peuvent être de couleur jaune.

Enfin, un triangle 37, de couleur magenta par exemple, pointé selon un rayon du cercle 5, complète la visualisation en indiquant par déplacement le long de ce cercle l'évolution des valeurs de l'angle de roulis φ.

Cette visualisation est complétée, comme on le verra plus loin en détail, par l'image R' du panneau de réflecteur R, fournie par la caméra C. Cette image est superposée aux différents polygones décrits plus haut et elle permet à la personne ou au pilote chargé de contrôler l'assemblage de deux objets, de vérifier par exemple que l'orientation des deuxième et troisième polygones PS1, PS2, dans le plan transversal Y_{A}, Z_{A}, (orientation du deuxième objet par rapport au premier objet), n'est pas aberrante vis-à-vis de l'orientation correspondante de l'image de la cible de réflecteur R. La visualisation peut aussi être complétée dans une zone Z₉ par différentes informations utiles au pilote du véhicule N, ou du robot.

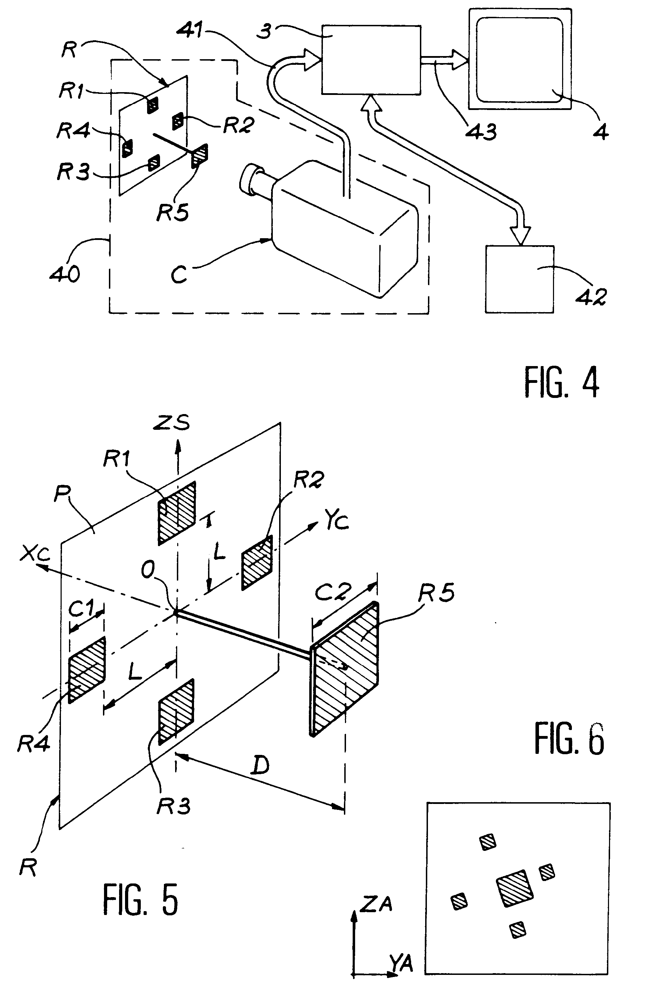

La description suivante des figures 4 à 7 va permettre de mieux comsprendre maintenant la structure du système de l'invention.

La figure 4 représente schématiquement ce système. Ce système comporte des moyens de repérage 40 qui fournissent dans le premier repère de référence, sur des sorties 41, des signaux représentatifs des valeurs instantanées d'écarts et d'angles de Cardan du deuxième repère de référence par rapport au premier repère.

Ces moyens de repérage 40 comportent une cible caractéristique R de réflecteurs R₁, R₂, R₃, R₄, R₅. Cette cible est solidaire du deuxième objet, c'est-à-dire la station orbitale S dans l'exemple choisi. Ces moyens de repérage 40 comportent aussi des moyens C, solidaires du premier objet, c'est-à-dire du véhicule spatial N, qui fournissent sur des sorties 41 des signaux représentatifs de l'image de la cible R, des écarts et des angles de Cardan définis plus haut. Ces moyens C sont constitués de préférence par une caméra vidéo, par exemple de type CCD.

Le système comporte aussi un calculateur 3, ici embarqué à bord du véhicule N. Ce calculateur est relié aux sorties 41 des moyens de repérage 40, ainsi qu'à une mémoire 42. Cette mémoire permet d'enregistrer notamment des valeurs de paramètres de repérage, des valeurs de paramètres de traitement, ainsi que des programmes nécessaires à ces traitements.

Le calculateur permet de traiter les signaux représentatifs des valeurs instantanées d'écarts et d'angles définies plus haut, pour obtenir ces valeurs, ainsi que d'autres valeurs décrites plus haut et permettant le contrôle du déplacement pour l'assemblage du premier objet N, avec le deuxième objet S.

Enfin, le système comporte des moyens de visualisation 4 colorée, de préférence à écran cathodique ou à cristaux liquides. Ces moyens de visualisation sont reliés à des sorties de commande 43, du calculateur 3. Ils permettent de visualiser les différentes informations et figures de contrôle décrites à la figure 3.

La figure 5 représente schématiquement et en perspective un exemple de cible caractéristique R de réflecteurs R₁, R₂, R₃, R₄, R₅. Les réflecteurs R₁, R₂, R₃, R₄, par exemple, sont identiques, de forme carrée, de dimension C1. Les réflecteurs R₁ et R₃ sont disposés sur l'axe Z_{S} du deuxième repère de référence, tandis que les réflecteurs R₂ et R₄ sont disposés sur un axe Y_{C}, parallèle à l'axe Y_{S} du repère de référence. Tous ces réflecteurs sont situés dans le plan Y_{S}, Z_{S}, du deuxième repère de référence, et ils sont à égale distance L de l'origine O du repère (O, Y_{C}, Z_{S}).

Le réflecteur R₅ est situé en avant du plan défini par les axes Y_{C} et Z_{S}, à une distance D de ce plan. Il a lui aussi une forme carrée par exemple et une dimension C2, plus importante que C1.

La caméra C est orientée selon l'axe X_{A} du premier repère de référence lié au véhicule. Selon la distance de cette caméra par rapport au deuxième repère de référence, et selon son orientation par rapport aux axes de ce deuxième repère, les positions, les orientations et les dimensions des images de ces réflecteurs dans le plan (Y_{A}, Z_{A}) du premier repère de référence varient, comme le montre schématiquement la figure 6. Cette figure est un exemple d'image de la cible obtenue sur l'écran des moyens de visualisation 4. L'analyse et le traitement de cette image par le calculateur 3 permettent, de façon connue, de déterminer les valeurs instantanées d'écarts et d'angles mentionnées plus haut.

Sur le support de visualisation 4, les informations analogiques visualisées, et qui sont animées par des écarts, présentent des déplacements qui sont calculés, non pas en fonction des écarts réels, mais en divisant chacun de ces écarts par l'écart maximal autorisé pur chacun d'eux. Cet écart maximal varie en fonction de la distance entre le premier objet et le deuxième objet, afin d'assurer une précision croissante dans la visualisation des informations animées. Ainsi, un écart angulaire (d'un angle de Cardan) de 5 degrés par exemple, lorsque le premier objet est à 100 mètres du deuxième objet, provoque un déplacement important des deuxième et troisième polygones (PS1, PS2) sur l'écran 4, tandis qu'un déplacement tout aussi important est provoqué par un écart de 0,5 degré seulement, lorsque ces deux objets sont à une distance de 5 mètres par exemple. Les informations analogiques animées selon les écarts comportent notamment :
- les deuxième et troisième polygones (PS1, PS2),
- les curseurs mobiles 27, 32, montrant les évolutions des valeurs instantanées des écarts transversaux Y, Z,
- les curseurs mobiles 12, 16, dans lesquels sont inscrites les valeurs respectives des vitesses de variation ψ', ϑ', φ', des angles de Cardan.

Cette précision croissante dans la visualisation des informations analogiques animées, notamment dans le cas de l'arrimage d'un véhicule spatial avec une station orbitale, permet au pilote d'agir de manière beaucoup plus sensible sur les commandes de déplacement du véhicule.

On notera enfin que d'autres informations peuvent être affichées sur le support de visualisation, telles que les domaines respectifs de validité des paramètres X, X', Y, Y'...etc. Il peut également être prévu des modifications de couleurs, notamment dans l'affichage des valeurs des écarts pour indiquer des dépassements de limites de validité de ces valeurs.

L'invention permet bien d'atteindre les buts mentionnés plus haut, et notamment le contrôle à distance de l'assemblage de deux objets, sans vision directe de ces objets.

## Revendications

1. Procédé pour contrôler à distance l'assemblage d'un premier objet (N) avec un deuxième objet (S), cet assemblage étant effectué par commande d'un déplacement relatif du premier objet (N) par rapport au deuxième objet (S), ce déplacement étant un mouvement de rapprochement par translation du premier objet en direction du deuxième objet, et/ou un mouvement de translation latérale du premier objet par rapport au deuxième objet, et/ou un mouvement de rotation du premier objet par rapport au deuxième objet, ces objets ayant respectivement une première et une deuxième parties (1, 2) d'assemblage, le procédé étant caractérisé en ce qu'il consiste :
- à définir un premier et un deuxième repères de référence (0₁, X_{A}, Y_{A}, Z_{A} et 0₂, X_{S}, Y_{S}, Z_{S}) liés respectivement aux premier et deuxième objets (N, S), chaque repère étant défini par une origine et trois axes orthogonaux,
- à déterminer dans le premier repère de référence (0₁, X_{A}, Y_{A}, Z_{A}), au cours dudit déplacement relatif, des valeurs instantanées d'écarts (X, Y, Z) entre l'origine (0₂) du deuxième repère de référence et l'origine (0₁) du premier repère de référence, et des valeurs instantanées d'angles de Cardan (φ, ϑ, ψ), dits de roulis, de tangage et de lacet, des axes du deuxième repère par rapport aux axes respectivement correspondants du premier repère,
- à traiter lesdites valeurs instantanées pour visualiser sur un support de visualisation (4) lié au premier objet (N), les valeurs instantanées des écarts (X, Y, Z) et des angles de Cardan (φ, ϑ, ψ), et au moins un premier polygone (PN) fixe sur ce support, représentant un contour fictif de ladite première partie (1) d'assemblage, un deuxième polygone (PS1), mobile sur ce support, représentant un contour fictif de ladite deuxième partie (2) d'assemblage, ces deux polygones étant de même forme et de dimension semblable, et le deuxième polygone ayant une position et une orientation instantanées dépendant des valeurs instantanées correspondantes des angles de Cardan (φ, ϑ, ψ) du deuxième objet par rapport au premier objet, et un troisième polygone (PS2) intérieur et homothétique au deuxième polygone (PS1), de même orientation que ce deuxième polygone, ce troisième polygone (PS2) étant mobile à l'intérieur du deuxième polygone (PS1) et occupant une position dépendant des écarts latéraux (Y, Z) du deuxième objet par rapport au premier objet,
- à partir de cette visualisation, à agir sur la commande (P) dudit déplacement relatif pour faire coïncider les premier et deuxième polygones (PN, PS1) et pour centrer le troisième polygone (PS2) dans le deuxième polygone (PS1), jusqu'à une valeur nulle de ladite distance entre les origines des repères.

2. Procédé selon la revendication 1, caractérisé en ce qu'il consiste en outre, par traitement des valeurs instantanées des angles (φ, ϑ, ψ) de Cardan, à visualiser sur ledit support de visualisation (4), des valeurs instantanées (φ', ϑ', ψ') de vitesses de variation des angles de Cardan au cours de déplacement.

3. Procédé selon la revendication 1, caractérisé en ce qu'il consiste en outre, par traitement des valeurs instantanées des écarts, à visualiser sur ledit support de visualisation (4), des valeurs instantanées de vitesses (X') de rapprochement dudit premier objet (N) avec ledit deuxième objet (S).

4. Procédé selon la revendication 3, caractérisé en ce qu'il consiste aussi à visualiser respectivement par des curseurs mobiles (27, 32) dans des échelles fixes, les évolutions des valeurs instantanées des écarts transversaux (Y, Z), et par des signes distinctifs (31, 36), des prédictions d'évolution de ces écarts dans un sens déterminé.

5. Procédé selon la revendication 4, caractérisé en ce qu'il consiste à visualiser respectivement les valeurs de vitesses de variation (φ', ϑ', ψ') des angles de Cardan, dans des curseurs mobiles (6, 12, 16) vis-à-vis d'échelles fixes.

6. Procédé selon la revendication 5, caractérisé en ce qu'il consiste à calculer les déplacements des deuxième et troisième polygones et des curseurs sur le support de visualisation, avec une précision croissante lorsque la distance des premier et deuxième objets décroît.

7. Procédé selon la revendication 3, caractérisé en ce qu'il consiste à visualiser les valeurs instantanées (X') de vitesses de rapprochement, dans un curseur (21) fixe vis-à-vis d'une échelle de valeurs défilantes, et à visualiser la prédiction de la croissance ou de la décroissance de ces vitesses, par un signe distinctif (25).

8. Système de contrôle à distance de l'assemblage d'un premier objet (N) avec un deuxième objet (S), cet assemblage étant effectué par commande d'un déplacement relatif du premier objet par rapport au deuxième objet, ce déplacement étant un mouvement de rapprochement du premier objet en direction du deuxième objet, et/ou un mouvement de translation latérale du premier objet par rapport au deuxième objet, et/ou un mouvement de rotation du premier objet par rapport au deuxième objet, ces objets présentant respectivement une première et une deuxième parties (1, 2) d'assemblage, caractérisé en ce que le système comporte :
- des moyens de repérage (40) pour fournir, dans un premier repère de référence (0₁, X_{A}, Y_{A}, Z_{A}) lié au premier objet (N), au cours du déplacement, des signaux représentatifs de valeurs instantanées d'écarts entre l'origine du premier repère de référence lié au premier objet et l'origine d'un deuxième repère de référence (0₂, X_{S}, Y_{S}, Z_{S}) lié au deuxième objet (S), et des valeurs instantanées d'angles de Cardan (φ, ϑ, ψ), dits de roulis, de tangage et de lacet, respectivement entre des axes du deuxième repère et des axes correspondants du premier repère, chaque repère étant défini par une origine et trois axes orthogonaux, les signaux représentatifs des valeurs instantanées étant fournis sur des sorties (41) des moyens de repérage (40),
- un calculateur (3) relié à une mémoire (42) et aux sorties (41) des moyens de repérage, pour traiter les signaux représentatifs des valeurs instantanées, et pour obtenir ces valeurs instantanées, et pour permettre ledit contrôle du mouvement du premier objet (N) par rapport au deuxième objet (S),
- des moyens de visualisation (4), reliés à des sorties de commande (43) du calculateur (3) pour visualiser sur un support de visualisation, au cours du déplacement, au moins des valeurs instantanées (X, Y, Z) des écarts et des angles (φ, ϑ, ψ) de Cardan, des valeurs instantanées (φ', ϑ', ψ') de variations de vitesses des angles de Cardan, des valeurs instantanées de vitesses de rapprochement (X'), et pour visualiser au moins un premier polygone (PN) fixe sur le support, représentant un contour fictif de ladite première partie (1) d'assemblage, un deuxième polygone (PS1), mobile sur ce support, représentant un contour fictif de ladite deuxième partie (2) d'assemblage, ces deux polygones étant de même forme et de même dimension et le deuxième polygone ayant une position et une orientation instantanées dépendant des valeurs instantanées correspondantes des angles de Cardan (φ, ϑ, ψ) du deuxième objet par rapport au premier objet, et un troisième polygone (PS2), intérieur et homothétique au deuxième polygone (PS1) de même orientation que ce deuxième polygone, ce troisième polygone étant mobile à l'intérieur du deuxième polygone et occupant une position dépendant des écarts latéraux du deuxième objet par rapport au premier objet, cette visualisation permettant de contrôler à distance le déplacement du premier objet par rapport au deuxième objet pour agir en conséquence sur la commande (P) de déplacement du premier objet par rapport au deuxième objet.

9. Système selon la revendication 8, caractérisé en ce que les moyens de repérage (40) comportent une cible caractéristique (R) de réflecteurs solidaires du deuxième objet (S), et un moyen (C) solidaire du premier objet (N), fournissant sur des sorties (41) des signaux représentatifs de l'image de la cible, des écarts de distance et des angles de Cardan dans le premier repère de référence.

10. Système selon la revendication 9, caractérisé en ce que le moyen pour obtenir lesdits signaux représentatifs est constitué par une caméra vidéo (C) fournissant lesdits signaux sur des sorties (41).

11. Système selon la revendication 10, caractérisé en ce que les moyens de visualisation (4) sont des moyens à écran, l'image de la cible (R) étant superposée sur l'écran, avec lesdits premier, deuxième et troisième polygones (PN, PS1, PS2).

12. Système selon la revendication 11, caractérisé en ce que les moyens (4) de visualisation à écran sont des moyens à commande de visualisation dans différentes couleurs.

13. Système selon l'une quelconque des revendications 8 à 12, caractérisé en ce que le premier objet (N) est solidaire du bras d'un robot, le système étant utilisé pour contrôler l'assemblage de la première partie (1) du premier objet avec la deuxième partie (2) du deuxième objet.

14. Système selon l'une quelconque des revendications 8 à 12, caractérisé en ce que la première partie (1) du premier objet (N) est une pièce d'arrimage d'un véhicule spatial, la deuxième partie (2) du deuxième objet (S) étant une pièce d'arrimage d'une station spatiale orbitale, le système étant utilisé pour contrôler le rendez-vous spatial entre le vehicule et la station.

## Patentansprüche

1. Verfahren zur Fernsteuerung des Zusammenbaus eines ersten Gegenstandes (N) mit einem zweiten Gegenstand (S), wobei dieser Zusammenbau durch den Befehl einer relativen Verschiebung des ersten Gegenstandes (N) in bezug auf den zweiten Gegenstand (S) durchgeführt wird, wobei diese Verschiebung eine Bewegung der Annäherung durch Verschieben des ersten Gegenstandes in Richtung des zweiten Gegenstandes und/oder eine seitliche Verschiebebewegung des ersten Gegenstandes in bezug auf den zweiten Gegenstand und/oder eine Drehbewegung des ersten Gegenstandes in bezug auf den zweiten Gegenstand ist, wobei diese Gegenstände einen ersten bzw. einen zweiten Zusammenbauteil (1, 2) haben, und das Verfahren **dadurch** g**ekennzeichnet** ist, daß es besteht aus:
- Festlegen eines ersten und eines zweiten Bezugssystems (O₁, X_{A}, Y_{A}, Z_{A} und O_{2,} X_{S}, Y_{S}, Z_{S}), die mit dem ersten bzw. zweiten Gegenstand (N, S) verbunden sind, wobei jedes Bezugssystem durch einen Ursprung und drei orthogonale Achsen festgelegt ist,
- Bestimmen von momentanen Abstandswerten (X, Y, Z) in dem ersten Bezugssystem (O₁, X_{A}, Y_{A}, Z_{A}) während der genannten relativen Verschiebung zwischen dem Ursprung (O₂) des zweiten Bezugssystems und dem Ursprung (O₁) des ersten Bezugssystems, und von momentanen Cardan'schen Winkelwerten (φ, ϑ, ψ), Rollwinkel, Nickwinkel und Gierwinkel genannt, der Achsen des zweiten Bezugssystems in bezug auf die jeweils entsprechenden Achsen des ersten Bezugssystems,
- Behandeln der genannten momentanen Werte, um auf einer Anzeigeeinrichtung (4), die mit dem ersten Gegenstand (N) verbunden ist, anzuzeigen die momentanen Abstandswerte (X, Y, Z) und die Cardan'schen Winkel (φ, ϑ , ψ) und wenigstens ein erstes Polygon (PN), das an dieser Einrichtung festgelegt ist und einen fiktiven Contour des genannten ersten Zusammenbauteils (1) darstellt, ein zweites zu dieser Einrichtung bewegbares Polygon (PS1), das einen fiktiven Contour des genannten zweiten Zusammenbauteils (2) darstellt, wobei diese zwei Polygone dieselbe Form und ähnliche Abmessungen haben, und das zweite Polygon eine momentane Position und Ausrichtung hat, die von den entsprechenden momentanen Werten der Cardan'schen Winkel (φ, ϑ, ψ) des zweiten Gegenstandes in bezug auf den ersten Gegenstand abhängen, und ein drittes Polygon (PS2) im Inneren des und homothetisch zu dem zweiten Polygon (PS1) und derselben Ausrichtung wie das zweite Polygon, wobei dieses dritte Polygon (PS2) im Inneren des zweiten Polygons (PS1) bewegbar ist und eine Position in Abhängigkeit von den seitlichen Abständen (Y, Z) des zweiten Gegenstandes in bezug auf den ersten Gegenstand einnimmt,
- ausgehend von dieser Anzeige auf die Steuerung (P) der genannten relativen Verschiebung zu wirken, um bis zu einem Wert Null des genannten Abstandes zwischen den Ursprüngen der Bezugssysteme das erste und das zweite Polygon (PN, PS1) in Deckung zu bringen und das dritte Polygon (PS2) in dem zweiten Polygon (PS1) zu zentrieren.

2. Verfahren gemäß Anspruch 1, **dadurch gekennzeichnet,** daß es ferner darin besteht, durch Behandeln der momentanen Werte der Cardan'schen Winkel (φ, ϑ, ψ) auf der genannten Anzeigeeinrichtung (4) die momentanen Werte (φ', ϑ', ψ') der Geschwindigkeitsänderung der Cardan'schen Winkel im Laufe der Verschiebung anzuzeigen.

3. Verfahren gemäß Anspruch 1, **dadurch gekennzeichnet,** daß es ferner darin besteht, durch Behandeln der momentanen Abstandswerte auf der genannten Anzeigeeinrichtung (4) momentane Geschwindigkeitswerte (X') der Annäherung des genannten ersten Gegenstandes (N) an den genannten zweiten Gegenstand (S) anzuzeigen.

4. Verfahren gemäß Anspruch 3, **dadurch gekennzeichnet,** daß es auch darin besteht, jeweils durch bewegbare Gleitzeiger (27, 32) an festen Skalen die Entwicklung der momentanen Werte der Querabstände (Y, Z) und durch sich unterscheidene Zeichen (31, 36) die Voraussage der Entwicklung dieser Abstände in einem bestimmten Sinn anzuzeigen.

5. Verfahren gemäß Anspruch 4, **dadurch gekennzeichnet,** daß es darin besteht, jeweils die Werte der Geschwindigkeitsänderung (φ', ϑ', ψ') der Cardan'schen Winkel in bewegbaren Gleitzeigern (6, 12, 16) gegenüber festen Skalen anzuzeigen.

6. Verfahren gemäß Anspruch 5, **dadurch gekennzeichnet,** daß es darin besteht, die Verschiebungen des zweiten und dritten Polygons und der Gleitzeiger auf der Anzeigeeinrichtung mit zunehmender Genauigkeit zu berechnen, wenn der Abstand zwischen dem ersten und zweiten Gegenstand abnimmt.

7. Verfahren gemäß Anspruch 3, **dadurch gekennzeichnet,** daß es darin besteht, die momentanen Werte (X') der Annäherungsgeschwindigkeiten in einem Gleitzeiger (21) anzuzeigen, der gegenüber einer Skala mit vorbeilaufenden Werten fest ist, und die Voraussage der Zunahme oder der Abnahme dieser Geschwindigkeiten durch ein sich unterscheidendes Zeichen (25) anzuzeigen.

8. System zur Fernsteuerung des Zusammenbaus eines ersten Gegenstandes (N) mit einem zweiten Gegenstand (S), wobei dieser Zusammenbau durch den Befehl einer relativen Verschiebung des ersten Gegenstandes (N) in bezug auf den zweiten Gegenstand (S) durchgeführt wird, wobei diese Verschiebung eine Bewegung der Annäherung durch Verschieben des ersten Gegenstandes in Richtung des zweiten Gegenstandes und/oder eine seitliche Verschiebebewegung des ersten Gegenstandes in bezug auf den zweiten Gegenstand und/oder eine Drehbewegung des ersten Gegenstandes in bezug auf den zweiten Gegenstand ist, wobei diese Gegenstände einen ersten bzw. einen zweiten Zusammenbauteil (1, 2) darstellen, und das Verfahren **dadurch gekennzeichnet** ist, daß das System umfaßt:
- eine Peileinrichtung (40), um in einem ersten Bezugssystem (O₁, X_{A,} Y_{A}, Z_{A}), das mit dem ersten Gegenstand (N) verbunden ist, während der Verschiebung repräsentative Signale der momentanen Abstandswerte zwischen dem Ursprung des ersten Bezugssystems, das mit dem ersten Gegenstand verbunden ist, und dem Ursprung eines zweiten Bezugssystems (O_{2,} X_{S}, Y_{S}, Z_{S}), das mit dem zweiten Gegenstand (S) verbunden ist, und momentane Werte der Cardan'schen Winkel (φ, ϑ, ψ), die Rollwinkel, Nickwinkel und Gierwinkel genannt werden, jeweils zwischen den Achsen des zweiten Systems und den entsprechenden Achsen des ersten Systems zu liefern, wobei jedes System durch einen Ursprung und drei orthogonale Achsen festgelegt ist, wobei die repräsentativen Signale der momentanen Werte an Ausgängen (41) der Peileinrichtung (40) geliefert werden,
- einen Rechner (3), der mit einem Speicher (42) und den Ausgängen (41) der Peileinrichtung verbunden ist, um die repräsentativen Signale der momentanen Werte zu behandeln und um diese momentanen Werte zu erhalten und um die genannte Steuerung der Bewegung des ersten Gegenstandes (N) in bezug auf den zweiten Gegenstand (S) zu ermöglichen,
- Anzeigemittel (4), die mit den Steuerausgängen (43) des Rechners (3) verbunden sind, um auf einer Anzeigeeinrichtung während der Bewegung wenigstens die momentanen Werte (X, Y, Z) der Abstände und der Cardan'schen Winkel (φ, ϑ, ψ), die momentanen Werte (φ', ϑ', ψ') der Geschwindigkeitsänderungen der Cardan'schen Winkel, die momentanen Werte der Annäherungsgeschwindigkeiten (X') anzuzeigen, und um wenigstens ein erste Polygon (PN), das an der Einrichtung festgelegt ist und einen fiktiven Contour des genannten ersten Zusammenbauteils (1) darstellt, ein auf dieser Einrichtung bewegbares, zweites Polygon (PS1), das einen fiktiven Contour des genannten zweiten Zusammenbauteils (2) darstellt, wobei diese zwei Polygone dieselbe Form und dieselbe Abmessung haben und das zweite Polygon eine momentane Position und Ausrichtung haben, die von den entsprechenden momentanen Werten der Cardan'schen Winkel (φ, ϑ, ψ) des zweiten Gegenstandes in bezug auf den ersten Gegenstand abhängen, anzuzeigen, sowie ein drittes Polygon (PS2), das im Inneren des und homothetisch zu dem zweiten Polygon (PS1) mit der gleichen Ausrichtung wie dieses zweite Polygon ist, wobei dieses dritte Polygon im Inneren des zweiten Polygons bewegbar ist und eine Position in Abhängigkeit der seitlichen Abstände des zweiten Gegenstandes in bezug auf den ersten Gegenstand einnimmt, wobei diese Anzeige gestattet, die Verschiebung des ersten Gegenstandes in bezug auf den zweiten Gegenstand fernzusteuern, um als Folge auf die Steuerung (P) der Bewegung des ersten Gegenstandes in bezug auf den zweiten Gegenstand einzuwirken.

9. System gemäß Anspruch 8, **dadurch gekennzeichnet,** daß die Peileinrichtung (40) ein charakteristisches Ziel (R) von Reflektoren, die an dem zweiten Gegenstand (S) fest angebracht sind, und eine Einrichtung (C) umfaßt, die an dem ersten Gegenstand (N) fest angebracht ist und an den Ausgängen (41) repräsentative Signale für das Bild des Ziels, die Längen der Abstände und die Cardan'schen Winkel in dem ersten Bezugssystem liefert.

10. System gemäß Anspruch 9, **dadurch gekennzeichnet,** daß die Einrichtung, um die genannten repräsentativen Signale zu erhalten, von einer Fernsehkamera (C) gebildet ist, die die genannten Signale an den Ausgängen (41) bereitstellt.

11. System gemäß Anspruch 10, **dadurch gekennzeichnet,** daß die Anzeigemittel (4) Bildschirmeinrichtungen sind, wobei das Bild des Ziels (R) auf dem Schirm mit dem genannten ersten, zweiten und dritten Polygon (PN, PS1, PS2) überlagert ist.

12. System gemäß Anspruch 11, **dadurch gekennzeichnet,** daß die Bildschirmanzeigemittel (4) Anzeigesteuereinrichtungen in unterschiedlicher Farbe sind.

13. System gemäß einem beliebigen der Ansprüche 8 bis 12, **dadurch gekennzeichnet,** daß der erste Gegenstand (N) fest an dem Arm eines Roboters angebracht ist, wobei das System verwendet wird, um den Zusammenbau des ersten Teils (1) des ersten Gegenstandes mit dem zweiten Teil (2) des zweiten Gegenstandes zu steuern.

14. System gemäß einem beliebigen der Ansprüche 8 bis 12, **dadurch gekennzeichnet,** daß der erste Teil (1) des ersten Gegenstandes (N) ein Befestigungsteil eines Raumfahrzeuges ist, der zweite Teil (2) des zweiten Gegenstandes (S) ein Befestigungsteil einer Raumstation ist, wobei das System verwendet wird, um die Begegung im Raum zwischen dem Fahrzeug und der Station zu steuern.

## Claims

1. Process for remotely checking the assembly of a first object (N) and a second object (S), said assembly being carried out by the control of a relative displacement of the first object (N) relative to the second (S), said displacement being an approach movement by translation of the first object in the direction of the second and/or a lateral translation movement of the first object with respect to the second and/or a rotary movement of the first object relative to the second, said objects being respectively a first and a second assembly or docking parts (1, 2), said process being characterized in that it comprises:
defining a first and a second reference marks (O₁, X_{A},Y_{A}, Z_{A} and O₂, X_{S}, Y_{S}, Z_{S}) linked respectively with the first and second objects (N, S), each mark being defined by an origin and three orthogonal axes;
determining in the first reference mark (O₁, X_{A}, Y_{A}, Z_{A}), during said relative displacement, instantaneous deviation values (X, Y, Z) between the origin (O₂) of the second reference mark and the origin (O₁) of the first reference mark and instantaneous values of cardan or gimbal angles (φ, ϑ, ψ), called roll, pitch and yaw angles, of the axes of the second mark with respect to the corresponding axes of the first mark;
processing said instantaneous values in order to display, on a display support (4) linked with the first object (N), the instantaneous values of the deviations (X, Y, Z) and the cardan angles (φ, ϑ, ψ), and at least one first polygon (PN) fixed to said support, representing a fictional contour of said first assembly part (1), a second polygon (PS1) mobile on said support, representing a fictional contour of said second assembly part (2), said two polygons having the same shape and a similar size and the second polygon having an instantaneous position and orientation dependent on the corresponding instantaneous values of the cardan angles (φ, ϑ, ψ) of the second object relative to the first object, and a third polygon (PS2) inside and homothetic of the second polygon (PS1) and of the same orientation as said second polygon, said third polygon (PS2) being mobile within the second polygon (PS1) and occupying a position dependent on the lateral deviations (Y, Z) of the second object relative to the first object;
on the basis of said display, acting on the control (P) of said relative displacement in order to bring about coincidence between the first and second polygons (PN, PS1) and in order to centre the third polygon (PS2) in the second polygon (PS1), up to a zero value of said distance.

2. Process according to claim 1, characterized in that it also consists, through the processing of instantaneous values of the cardan angles (φ, ϑ, ψ), the display on said display support (4) of instantaneous values (φ', ϑ', ψ') of the cardan angle variation speeds during said displacement.

3. Process according to claim 1, characterized in that it also consists, through the processing of the instantaneous values of the deviations, of displaying on said display support (4), instantaneous approach speed values (X') for the first object (N) relative to the second object (S).

4. Process according to claim 3, characterized in that it also consists of respectively displaying by mobile cursors (27, 32) in fixed scales, the evolutions of the instantaneous values of the transverse deviations (Y, Z) and by distinctive symbols (31, 36) evolution predictions relative to said deviations in a given direction.

5. Process according to claim 4, characterized in that it consists of respectively displaying the variation speed values (φ', ϑ', ψ') of the cardan angles in cursors (6, 12, 16) moving relative to fixed scales.

6. Process according to claim 5, characterized in that it consists of calculating the displacements of the second and third polygons and cursors on the display support, with an increasing accuracy in the case of a decrease in the distance between the first ana second objects.

7. Process according to claim 3, characterized in that it consists of displaying the instantaneous approach speed values (X') in a cursor (21) which is fixed with respect to a moving value scale and displaying the prediction of the increase or decrease in these speeds by a distinctive symbol (25).

8. System for the remote checking of the assembly of a first object (N) to a second (S), said assembly being carried out by the control of a relative displacement of the first object relative to the second, said displacement being an approach movement of the first object in the direction of the second and/or a lateral translation movement of the first object relative to the second and/or a rotary movement of the first object relative to the second, said objects respectively having a first and a second assembly or docking parts (1, 2), characterized in that said system comprises:
marking means (40) for supplying in a first reference mark (O₁, X_{A}, Y_{A}, Z_{A}) linked with the first object (N), during the displacement, signals representing the instantaneous values of deviations between the origin of the first reference mark (O₂, X_{S}, Y_{S}, Z_{S}) linked with the first object and the origin of a second reference mark linked with the second object (S), and instantaneous values of cardan or gimbal angles (φ, ϑ, ψ), called roll, pitch and yaw angles, respectively between the axes of the second mark and the corresponding axes of the first mark, each mark being defined by an origin and three orthogonal axes, the representative signals of the instantaneous values being supplied on outputs (41) of the marking means (40);
a computer (3) connected to a memory (42) and to the outputs (41) of the marking means for processing the representative signals of the instantaneous values in order to obtain said instantaneous values and to permit said check of the movement of the first object (N) relative to the second (S);
display means (4) connected to the control outputs (43) of the com- puter (3) for displaying during the displacement, on the display support at least instantaneous values of the deviations (X, Y, Z) and the cardan angles (φ, ϑ, ψ), instantaneous values (φ', ϑ', ψ') of the speed variations of the cardan angles, instantaneous values of the approach speeds (X) and for displaying at least one fixed polygon (PN) on the support representing a fictional contour of said first assembly part (1), a second polygon (PS1), mobile on the support, representing a fictional contour of said second assembly part (2), these two polygons having the sane shape and size and the second polygon having an instantaneous position and orientation dependent on the corresponding instantaneous values of the cardan angles (φ, ϑ, ψ) of the second object relative to the first, and a third polygon (PS2), inside and homothetic of the second polgyon (PS1) and having the sane orientation as said second polygon, said third polygon being mobile within the second polygon and occupying a position dependent on lateral deviations of the second object relative to the first, said display making it possible to remotely check the displacement of the first object relative to the second in order to act as a consequence thereof on the displacement control (P) of the first object relative to the second.

9. System according to claim 8, characterized in that the marking means (40) incorporate a characteristic target (R) of reflectors integral with the second object (S) and a means (C) integral with the first object (N) supplying on outputs (41) signals representing the image of the target, cardan angles and distance deviations in the first reference mark.

10. System according to claim 9, characterized in that the means for obtaining said representative signals is constituted by a video camera (C) supplying said signals on outputs (41).

11. System according to claim 10, characterized in that the display means (4) are screen means, the image of the target (R) being superimposed on the screen with said first, second and third polygons (PN, PS1, PS2).

12. System according to claim 11, characterized in that the screen display means (4) are display control means in different colours.

13. System according to any one of the claims 8 to 12, characterized in that the first object (N) is integral with the arm of a robot, the system being used for checking the assembly of the first part (1) of the first object with the second part (2) of the second object.

14. System according to any one of the claims 8 to 12, characterized in that the first part (1) of the first object (N) is a docking or assembly part of a space vehicle, the second part (2) of the second object (S) being a docking or assembly part of an orbiting space station, the system being used for checking the space rendez-vous between the vehicle and the station.
